# EUROPÄISCHE PATENTANMELDUNG

(11) **EP 1 234 718 A1**
(43) Veröffentlichungstag der Anmeldung: **28.08.2002**
(21) Anmeldenummer: 01104619.0
(22) Anmeldetag: 23.02.2001
(51) Int. Cl.: B60Q 1/52, B60Q 1/44

(54) **System zur Vorwarnung und Vorabinformation von Verkehrsteilnehmern**

(71) Anmelder: DaimlerChrysler AG, 70567 Stuttgart (DE)
(72) Erfinder: Hahn, Stefan, 89075 Ulm (DE)

(57) **Zusammenfassung**

Die Erfindung betrifft ein System zur Vorwarnung oder Vorinformation anderer Verkehrsteilnehmer durch ein Fahrzeug, das eine optische Signaleinrichtung zur Wahrnehmung durch andere Verkehrsteilnehmer aufweist, mit einer Sensorik zur automatischen Erkennung von Situationen, die möglicherweise eine Vorwarnung oder Vorinformation anderer Verkehrsteilnehmer erforderlich machen. Wenn eine solche Situation erkannt wird, wird die Signaleinrichtung wenigstens einmal für eine kurze Zeit aktiviert, deren Dauer unterhalb einer bewussten und oberhalb einer unbewussten Wahrnehmungsschwelle der Verkehrsteilnehmer liegt.

## Beschreibung

Die Erfindung betrifft ein System zur Vorwarnung oder Vorinformation von Verkehrsteilnehmern durch optische Signaleinrichtungen nach dem Oberbegriff des Patentanspruchs 1.

Systeme zur Warnung anderer Verkehrsteilnehmer sind beispielsweise Fahrzeugeinrichtungen, wie Bremsleuchten, mit denen dem nachfolgenden Verkehr eine Verzögerung signalisiert wird. Die Bremsleuchten werden aktiviert, sobald der Fahrer das Bremspedal betätigt. Ein anderes bekanntes Mittel zur optischen Information von Verkehrsteilnehmern ist eine Ampelanlage, welche mittels Lichtsignalen den Verkehr regelt und Verkehrsteilnehmer über die aktuelle Verkehrsregelung aufklärt.
Vor allem, in bezug auf Bremsleuchten und deren Ansteuerung hat man verschiedene Modifikationen zur Erhöhung der Verkehrssicherheit vorgeschlagen. Diese Modifikationen beziehen sich einerseits auf die geometrische Gestaltung bzw. eine dynamische Änderung des Bildes der Bremsleuchten, z.B. durch Blinksignale, andererseits auf eine Vorverlegung des Zeitpunktes, in dem die Bremsleuchten aktiviert werden, z.B. beim schnellen Verlassen des Gaspedals, wie in der DE-A-197 13 235 beschrieben.
In der DE-A-197 22 775 wird vorgeschlagen, die auftretenden Beschleunigungen und Verzögerungen mit Hilfe einer Sensorik ständig zu registrieren und anhand der Sensorsignale die Stromzuführung zu den Bremsleuchten nach einem vorgegebenen Algorithmus vorausschauend zu steuern. Außerdem wird vorgeschlagen, trägheitslos schaltbare Lichtquellen wie z.B. Leuchtdioden für die Bremsleuchten zu verwenden, um ein Flackerlicht zu erzeugen. In einer Weiterbildung werden die Leuchtdioden mit einer vom menschlichen Auge nicht wahrnehmbaren Frequenz leuchten gelassen, die ein im nachfolgenden Fahrzeug eingebauter Lichtempfänger detektieren kann, um einen Warnton oder eine Zwangsbremsung auszulösen.
Derartige Modifikationen an den Bremsleuchten und deren Ansteuerung verletzen jedoch den gesetzlichen Rahmen und die Konventionen im Straßenverkehr. Insbesondere ist die Aktivierung der Bremsleuchten gesetzlich auf die Pedalbetätigung durch den Fahrer oder den Bremseingriff einer automatischen Längsführung durch ein elektronisches Stabilitätsprogramm beschränkt. Die aus der DE-A-197 22 775 bekannte unsichtbare Codierung im Bremslicht ist nur dann wirksam, wenn das nachfolgende Fahrzeug über einen passenden Lichtempfänger verfügt.
Aus dem nachveröffentlichten Stand der Technik DE 199 52 408 A1 ist ein System zur Ansteuerung einer optischen Signaleinrichtung an einem Fahrzeug bekannt, anhand derer andere Verkehrsteilnehmer gewarnt oder informiert werden sollen. Das System umfasst hierbei eine Sensorik zur Erkennung von Situationen, auf welche andere Verkehrsteilnehmer möglichst frühzeitig vorbereitet werden sollen, ohne die gesetzlichen Bestimmungen zu verletzen und ohne dass die anderen Verkehrsteilnehmer besondere technische Einrichtungen zur Erkennung der Warn- oder Informationssignale benötigen. Hierzu bedient sich das System einer Signaleinrichtung, welche so angesteuert wird, dass sie wenigstens einmal für eine kurze Zeitdauer, welche unterhalb einer bewussten und oberhalb einer unbewussten Wahrnehmungsschwelle der Verkehrsteilnehmer liegt, aktiviert wird. Dabei ist die unbewusste Wahrnehmungsschwelle als die Anzeigedauer definiert, bei der die Information gerade noch unbewusst aufgenommen wird, d.h. sich auf das spätere Verhalten einer Zielperson auswirkt, und die bewusste Wahrnehmungsschwelle ist als die Anzeigedauer definiert, bei der die Information der Zielperson bewusst wird. Hierbei wird die Erkenntnis ausgenutzt, dass optische Information, die so kurzzeitig dargeboten wird, dass sie bewusst nicht wahrgenommen werden kann, dennoch vom Menschen aufgenommen wird. Dieses Phänomen, "visual priming" genannt, wird z.B. beschrieben von A.J. Marcel in *Conscious and unconscious perception: Experiments on visual masking and word recognition,* Cognitive Psychology 15 (1983), S. 197-237. Bekanntestes Beispiel für dieses Phänomen ist der Austausch einzelner Bilder einer Filmsequenz gegen völlig andere Inhalte, die ein Beobachter beim Betrachten des Films bewusst nicht wahrnehmen kann, die sich aber dennoch auf seine Wahrnehmung bzw. sein Verhalten auswirken.

Aufgabe der Erfindung ein neuartiges System zur Vorwarnung und Vorabinformation von Verkehrsteilnehmern durch optische Signaleinrichtungen zu finden.
Die Aufgabe wird durch ein System mit den Merkmalen des Patentanspruchs 1 gelöst. Vorteilhafte Ausgestaltungen und Weiterbildungen der Erfindung sind durch die untergeordneten Ansprüche gegeben.

In vorteilhafter Weise macht sich das erfindungsgemäße System den aus dem nachveröffentlichten Stand der Technik DE 199 52 408 A1 bekannten Verfahren, der ) unbewußten Darbietung und Wahrnehmung von Information zu nutze. Dabei wird in besonders gewinnbringender Weise die Funktionalität eines solchen Systems durch die neuartige Ausgestaltung auf die Möglichkeit des generellen Einsatzes im Zusammenhang mit optischen Signalanlagen im Verkehr ausgedehnt.
So ist es beispielsweise denkbar eine Ampelanlage erfindungsgemäß so auszustatten, dass vor einem Signalwechsel die zu aktivierende Signalleuchte ihren Zustandswechsel durch unbewußt wahrnehmbares aufleuchten bzw. blinken einführt. So würden die Verkehrsteiinehmer frühzeitig gewarnt und könnten ihre Geschwindigkeit anpassen, so dass Ampelüberfahrten während der Rot-Phase in vielen Fällen vermieden werden könnten. Des weiteren wäre es denkbar die Ampelanlage mit einer Vorrichtung zur Erkennung von Verkehrsteilnehmern auszustatten, so dass für den Fall, dass ein Verkehrsteilnehmer unerlaubt die Straße betritt oder überquert (vor allem Fußgänger bei rot geschalteter Fußgängerampel) dieses einem anderen Fahrzeugführer der diesen Teilnehmer gefährden könnte durch eine erfindungsgemäße Signalisation des Ampelsignals kundgetan wird. So ist es denkbar einen Fahrzeugführer trotz grün geschalteter Ampel, durch unbewußt wahrnehmbares Aufleuchten des Rot-Licht-Signals für eine Gefahrensituation zu sensibilisieren; beispielsweise der Fall, daß ein Fußgänger unerlaubt die Fahrbahn überquert.
Zur detaillierten Erläuterung vorteilhafter Möglichkeiten der Ausgestaltungen und Weiterbildung der Erfindung, wird nachfolgend die erfindungsgemäße Ausgestaltung von optischen Signaleinrichtungen an einem Fahrzeug, insbesondere dem Bremslicht, beschrieben.
Bei einer solchen Ausgestaltung der Erfindung, wird der durch sie erzielbare Effekt insbesondere zur Warnung anderer Verkehrsteilnehmer genutzt. Es hat sich gezeigt, dass eine unterschwellige Warnung durch entsprechend kurzzeitiges Aufleuchten von Bremslichtern die Reaktionszeit des Fahrers eines nachfolgenden Fahrzeugs beträchtlich verkürzt, wenn die Bremssituation, auf die er unterbewußt vorbereitet worden ist, tatsächlich eintritt.
Anders als bei der aus der DE-A-197 22 775 bekannten, relativ hochfrequenten Modulation des Bremslichts, bei dem die Modulation überhaupt nicht, das Bremslicht als solches jedoch sehr wohl von anderen Verkehrsteilnehmern wahrgenommen wird, wird bei der Erfindung das optische Warnsignal mit einer solchen Dauer präsentiert, dass es von anderen Verkehrsteilnehmern der Regel nicht bewusst wahrgenommen wird, jedoch deren Wahrnehmungsvermögen schärft.
Bei dieser Ausführungsform des erfindungsgemäßen Systems wird die Signaleinrichtung normalerweise unmittelbar, nachdem eine entsprechende Situation erkannt worden ist, für die kurze Zeit aktiviert. Es ist aber auch möglich, situationsabhängig mit der unterbewußten Sensibilisierung der anderen Verkehrsteilnehmer zu warten.
Wie erwähnt, eignet sich das erfindungsgemäße System besonders zur Warnung von nachfolgenden Fahrern vor drohenden Bremsmanövern durch unterbewußte Beeinflussung, ohne dass sich der bewusst wahrgenommene Eindruck des Bremssignals von dem heute üblichen unterscheidet, so dass den gesetzlichen Bestimmungen Genüge getan ist. Außerdem sind keinerlei technische Vorkehrungen am nachfolgenden Fahrzeug erforderlich.
Auf Grund dieser Merkmale der Erfindung sind Weiterbildungen möglich, die an sich bekannt sind, aus den erwähnten Gründen aber bisher nicht realisierbar waren. Zum Beispiel können Warnsignale mit abgestufter Intensität erzeugt werden, indem in Abhängigkeit von der Wahrscheinlichkeit, mit der ein Bremsmanöver vorausschauend erkannt wird, die Bremsleuchten mit verschiedener Intensität kurzzeitig aufleuchten gelassen werden. Bei hoher Wahrscheinlichkeit können noch weitere Leuchten einbezogen werden, um das unterschwellige Warnsignal zu verstärken, z.B. die Rückleuchten, sofern sie nicht bereits eingeschaltet sind. Bei als hoch erachteter Gefahr können die kurzzeitigen Lichtsignale auch in zeitlichen Abständen mehrmals hintereinander abgegeben werden, so lange sie nicht so kurz aufeinander folgen, dass sie bewusst wahrgenommen werden können.
Die Erfindung ist nicht nur in Verbindung mit Bremsleuchten nützlich, sondern auch in Verbindung mit anderen optischen Signaleinrichtungen am Fahrzeug, z.B. Nebelschlußleuchten, die kurzzeitig eingeschaltet werden, wenn ein Nebeldetektor aufkommenden Nebel erfasst.
Außerdem ist die Erfindung nicht auf die Vorwarnung vor Gefahrensituationen beschränkt. Man kann andere Verkehrsteilnehmer auch unterbewußt auf Situationen sensibilisieren, in denen nicht unmittelbar eine Gefahr droht, in denen es jedoch nützlich sein kann, wenn die anderen Verkehrsteilnehmer vorab informiert werden, ohne dass sie die Information bewusst verarbeiten müssen. Zum Beispiel, wenn sich jemand auf einer Abbiegespur einordnet, ohne den Fahrtrichtungsanzeiger einzuschalten, und dies von einer entsprechenden Sensorik erkannt wird, könnte der Fahrer des nachfolgenden Fahrzeugs auf Grund von kurzzeitigen, nicht bewusst wahrnehmbaren Blinksignalen leichter erkennen, dass er sich auf einer Abbiegespur befindet, und nötigenfalls rechtzeitig die Spur wechseln.
Einrichtungen zur automatischen Erkennung von Situationen, in denen nachfolgende Verkehrsteilnehmer z.B. vor einem bevorstehenden Bremsvorgang zu warnen sind, sind z.B. eine Sensorik zur Erfassung der Geschwindigkeit, mit der ein Regler für die Antriebsenergie des Kraftfahrzeugs zurückgeregelt wird, eine Sensorik zur Erfassung einer Annäherung des Kraftfahrzeugführers an eine Bremsbetätigungseinrichtung, eine Sensorik zur Erfassung der Geschwindigkeit des Kraftfahrzeugs, eine Sensorik zur Erfassung der Beschleunigung und/oder Verzögerung des Kraftfahrzeugs, eine Sensorik zur Erfassung von Abstand und/oder Geschwindigkeit vorausfahrender und/oder nachfolgender Fahrzeuge, eine Sensorik zur Erfassung von Warnsignalen vorausfahrender Fahrzeuge, und eine Sensorik zur Erfassung von Verkehrszeichen oder Lichtzeichen.

Falls das erfindungsgemäße System in vorteilhafter weise in einem Kraftfahrzeug, insbesondere einem Automobil Anwendung findet, ist der Regler für die Antriebsenergie normalerweise das Gaspedal und ist die Bremsbetätigungseinrichtung das Bremspedal. Die Erfindung ist auch bei einem Motorrad anwendbar, indem z.B. Betätigungen von Gasgriff und Handbremshebel detektiert werden, und auch bei nicht motorisierten Fahrzeugen wie z.B. Fahrrädern.
Die kurze Zeit, für die Signaleinrichtung aktiviert wird, nachdem eine entsprechende Situation erkannt worden ist, beträgt vorzugsweise ungefähr zehn Millisekunden bis einige zehn Millisekunden, z.B. zwanzig oder dreißig Millisekunden. Zwecks kostengünstiger Erzeugung solcher kurzzeitigen Lichtsignale enthält die Signaleinrichtung vorzugsweise ein oder mehrere lichtemittierende elektronische Bauelemente wie z.B. Leuchtdioden.
Es folgt die Beschreibung eines Ausführungsbeispiels anhand der Figur, die ein Flussdiagramm des Arbeitsprinzips eines Fahrzeug-Vorwarnsystems zeigt, mit dem andere Verkehrsteilnehmer durch kurzzeitige Lichtsignale vorgewarnt werden können.
Ein Kraftfahrzeug, in dem das Vorwarnsystem realisiert wird, enthält Sensoren zur Erfassung von Aktionen im Innenraum des Fahrzeugs wie z.B. Sensoren oder Annäherungssensoren zur Erfassung oder Vorhersage einer Betätigung von Gasund/oder Bremspedal, Sensoren zur Erfassung von Geschwindigkeit, Beschleunigung und/oder Verzögerung des Kraftfahrzeugs, Sensoren zur Erfassung der Umgebung nach vorn oder hinten, z.B. zur Erfassung von Abstand und/oder Relativgeschwindigkeit vorausfahrender und/oder nachfolgender Fahrzeuge, und/oder Sensoren zur Erfassung von Warnblinksignalen vorausfahrender Fahrzeuge oder roten Ampeln.
Außerdem enthält das Kraftfahrzeug Bremsleuchten, die jeweils eine Vielzahl von Leuchtdioden enthalten.
Nachdem eine oder mehrere der Sensoren eine Situation erkannt haben, in welcher der Fahrer des Kraftfahrzeugs möglicherweise die Bremse betätigen wird (S1), wird die erkannte Situation im Hinblick auf ihr Gefahrenpotential bzw. ihre Wichtigkeit bewertet (S2). Anschließend erfolgt die Auswahl eines geeigneten optischen Reizes, um Fahrer nachfolgender Fahrzeuge auf den möglichen Bremsvorgang zu sensibilisieren (S3). Nimmt zum Beispiel der Fahrer des Kraftfahrzeugs mit dem Vorwarnsystem schnell den Fuß vom Gaspedal, so wird eine normale Gefahrensituation angenommen, und beide Bremsleuchten werden z.B. 20 Millisekunden lang aufleuchten gelassen (S4). Wird ein zusätzliches Gefahrenpotential erkannt, z.B. ein geringer Abstand zu einem vorausfahrenden Fahrzeug, so kann ein verstärkter Reiz ausgewählt werden, indem im Verfahrensschritt S4 neben den normalen Bremsleuchten z.B. eine Zusatzbremsleuchte am Fahrzeug und/oder die Rückleuchten kurz aufleuchten gelassen werden. Außerdem kann der optische Reiz mehrmals wiederholt werden. Diese Verfahrenschritte können z.B. von einem geeignet programmierten Mikroprozessor durchgeführt bzw. gesteuert werden.
Die Zeit, während der die Bremsleuchten aufleuchten, wird gewinnbringend durch Versuche im Voraus festgelegt und so kurz gewählt, dass die Fahrer nachfolgender Fahrzeuge das Aufleuchten gerade noch nicht bewusst wahrnehmen können.
Auf Grund der Integrationswirkung des Auges ist es möglich, dass bei Verwendung des Systems bei Dunkelheit der zu warnende Verkehrsteilnehmer, welcher das System beobachtet, das Aufleuchten der Bremsleuchten wahrnimmt, obwohl die Dauer dieses Aufleuchtens so kurz gewählt wurde, dass dies nicht wahrgenommen werden sollte. Da dieser Zustand zu rechtlichen Problemen führen könnte (Straßenverkehrsordnung), ist es für den praktischen Einsatz denkbar das System so auszuführen, dass es deaktiviert werden kann. Dabei ist es denkbar, dass die Deaktivierung manuell vom Fahrzeugführer vorgenommen wird oder auch mittels eines die Lichtverhältnisse in der Fahrzeugumgebung messenden Sensors erfolgt, so dass bei Dunkelheit in der Umgebung des Fahrzeugs das erfindungsgemäße Warnsystem deaktiviert ist. Andererseits kann das System gewinnbringend auch so ausgelegt werden, dass die Dauer des Aufleuchtens variiert werden kann. Dies insbesondere durch Anlagen, welche die augenblicklichen Sichtverhältnisse (wie beispielsweise Tageslicht, Dämmerung, Dunkelheit) auswerten.

## Patentansprüche

1. System zur Vorwarnung oder Vorinformation von Verkehrsteilnehmern durch optische Signaleinrichtungen
**dadurch gekennzeichnet,**
**dass** die Signaleinrichtung, wenigstens einmal für eine kurze Zeitdauer aktiviert wird, wobei die Zeitdauer der Aktivierung so gewählt wird, dass sie unterhalb einer bewussten und oberhalb einer unbewussten Wahrnehmungsschwelle der Verkehrsteilnehmer liegt.

2. System nach Anspruch 1, **dadurch gekennzeichnet, dass** das System über eine Sensorik zur automatischen Erkennung von Situationen verfügt, die möglicherweise eine Vorwarnung oder Vorinformation anderer Verkehrsteilnehmer erforderlich machen.

3. System nach Anspruch 2, **dadurch gekennzeichnet, dass** die Sensorik eine oder mehrere der folgenden Einrichtungen enthält:
- eine Sensorik zur Erfassung der Geschwindigkeit eines Kraftfahrzeugs oder Verkehrsteilnehmers,
- eine Sensorik zur Erfassung der Betätigung einer Fahrzeugbremse,
- eine Sensorik zur Erfassung der Geschwindigkeit des Kraftfahrzeugs,
- eine Sensorik zur Erfassung der Beschleunigung und/oder Verzögerung des Kraftfahrzeugs,
- eine Sensorik zur Erfassung von Abstand und/oder Geschwindigkeit vorausfahrender und/oder nachfolgender Fahrzeuge,
- eine Sensorik zur Erfassung von Warnsignalen vorausfahrender Fahrzeuge,
- eine Sensorik zur Erfassung von Verkehrszeichen oder Lichtzeichen,
- eine Sensorik zur Erfassung anderer Verkehrsteilnehmer und ihrer Interaktion mit dem Verkehr.

4. System nach einem der Ansprüche 1 bis 3, **dadurch gekennzeichnet, dass** die Signaleinrichtung für eine vorgebbare Zeitdauer, insbesondere ungefähr zehn bis einige zehn Millisekunden lang aktiviert wird, nachdem eine Situation erkannt worden ist, vor welcher die Verkehrsteilnehmer gewarnt oder über welche sie informiert werde sollten.

5. System nach einem der Ansprüche 1 bis 4, **dadurch gekennzeichnet, dass** die Signaleinrichtung ein oder mehrere lichtemittierende elektronische Bauelemente enthält.

6. System nach Anspruch 5, **dadurch gekennzeichnet, dass** die Licht emittierenden elektronischen Bauelemente Leuchtdioden sind.

7. System nach einem der Ansprüche 1 bis 6, **dadurch gekennzeichnet, daß** das System deaktiviert werden kann.

8. System nach einem der Ansprüche 1 bis 6, **dadurch gekennzeichnet, daß** das System in der Zeitdauer seiner Anzeige variabel eingestellt werden kann.

9. System nach einem der Ansprüche 7 oder 8, **dadurch gekennzeichnet, daß** die Deaktivierung oder Einstellung des Systems durch einen Fahrzeugführer oder Fahrzeuginsassen manuell vorgenommen werden kann.

10. System nach einem der Ansprüche 7 bis 9, **dadurch gekennzeichnet, daß** die Deaktivierung oder Einstellung des Systems durch einen die Lichtverhältnisse in der Fahrzeugumgebung messenden Sensor vorgenommen wird.

11. Verwendung des Systems nach einem der Ansprüche 1 bis 10, in einem Kraftfahrzeug, insbesondere einem Automobil.

12. Verwendung des Systems nach einem der Ansprüche 1 bis 10, in Verbindung mit einem Einrichtung zur Verkehrsregelung, insbesondere einer Ampelanlage.
